# EUROPÄISCHE PATENTSCHRIFT

(11) **EP 2 788 790 B1**
(45) Veröffentlichungstag und Bekanntmachung des Hinweises auf die Patenterteilung: **23.03.2016**
(21) Anmeldenummer: 12772304.7
(22) Anmeldetag: 10.10.2012
(51) Int. Cl.: G01S 15/93

(54) **VERFAHREN ZUR LOKALISIERUNG EINER FAHRZEUGECKE UND FAHRERASSISTENZSYSTEM**
METHOD FOR LOCATING A VEHICLE CORNER AND DRIVER ASSISTANCE SYSTEM
PROCÉDÉ DE LOCALISATION D'UN ANGLE DE VÉHICULE ET SYSTÈME D'AIDE À LA CONDUITE

(30) Priorität: 06.12.2011 DE 102011087775
(43) Veröffentlichungstag der Anmeldung: 15.10.2014
(73) Patentinhaber: Robert Bosch GmbH, 70442 Stuttgart (DE)
(72) Erfinder: HELMLE, Michael, 73732 Esslingen (DE)
(86) Internationale Anmeldenummer: PCT/EP2012/070002
(87) Internationale Veröffentlichungsnummer: WO 2013/083315

(56) Entgegenhaltungen:
- DE-A1-102005 032 095
- DE-A1-102008 002 521
- DE-A1-102008 007 667
- DE-A1-102009 002 866
- DE-B3-102006 054 981

## Beschreibung

### Stand der Technik

Die Erfindung betrifft ein Verfahren zur Lokalisierung einer Fahrzeugecke und ein Fahrerassistenzsystem.

DE 10 2008 007 667 A1 zeigt ein Verfahren zum Betreiben eines Einparkhilfesystems für ein Fahrzeug, wobei Ultraschallsensoren während des Vorbeifahrens an einer Parklücke Signale senden und empfangen, um hieraus die Länge und/oder die Breite einer Parklücke zu bestimmen. Dabei wird dem Fahrer die Entscheidung abgenommen, ob und wie sein Fahrzeug in die gefundene Parklücke passt. Das darin offenbarte Verfahren sieht vor, eine Abtastrate der Ultraschallsensoren zu erhöhen, wenn ein Hindernis in einem Abstand detektiert wird, welcher kleiner ist als ein festgelegter Grenzabstand. Hierdurch wird eine verbesserte Detektion von geparkten Fahrzeugen erreicht.

Aus der DE 10 2005 032 095 A1 ist eine Parkvorrichtung bekannt, bei der Sensoren an einem Fahrzeug eine Fahrzeugumgebung und einen Abstand zwischen Parklückenbegrenzungen erfassen. Dabei wird die Kontur eines eine Parklücke begrenzenden Fahrzeugs erfasst. Durch Erkennung eines Radbereichs wird auf die Ausrichtung des die Parklücke begrenzenden Fahrzeugs und damit auf die Ausrichtung der Parklücke geschlossen.

Bei Systemen, welche vier Ultraschallsensoren verwenden, die einzeln nacheinander feuern, dauert ein vollständiger Scan der Umgebung ca. 4 x 30 ms, also ca. 120 ms. Andere Systemausprägungen erlauben auch das gleichzeitige Senden von mehreren Sensoren beispielsweise mit wechselnden Anregungsmustern und daraus resultierender kürzerer Scanzeit. Wenn sich das Objekt in einer geringen Distanz von dem Fahrzeug befindet, dann reduziert sich die Laufzeit der Ultraschallsignale, so dass sich der vollständige Scan der Umgebung bei einzeln feuernden Sensoren bei einer doppelten Abtastrate auf die Hälfte - also ca. 60 ms - verkürzen lässt. Ein beispielsweise mit 18 km/h an einer Reihe geparkter Fahrzeuge vorbeirollendes Fahrzeug schafft es, innerhalb eines Scans mit der doppelten Abtastrate eine Distanz von 30 cm zurückzulegen, bei einfacher Abtastrate schafft das Fahrzeug eine Distanz von 60 cm. Von dieser Größenordnung ist daher auch die Unschärfe bei der Detektion einer Ecke eines geparkten Fahrzeugs.

Es ist eine Aufgabe der Erfindung, ein Verfahren zur Lokalisierung einer Fahrzeugecke anzugeben, welches genauere Vorhersagen über eine Lage einer Fahrzeugecke und deren Distanz zu dem Ego-Fahrzeug ermöglicht.

### Offenbarung der Erfindung

Die Aufgabe wird gelöst durch ein Verfahren mit den Merkmalen des Anspruchs 1 und durch ein Fahrerassistenzsystem mit den Merkmalen des Anspruchs 10. Weitere Vorteile ergeben sich aus den Merkmalen der abhängigen Ansprüche.

### Vorteile der Erfindung

Erfindungsgemäß erfasst bei einem Verfahren zur Lokalisierung einer Fahrzeugecke ein Sensorsystem, insbesondere ein Ultraschallsensorsystem oder ein Kamerasensorsystem, einen Radbereich eines Fahrzeugs und es wird ein Abstand des Radbereichs zu einer Fahrzeugecke des erfassten Fahrzeugs geschätzt, woraufhin zumindest ein Impuls eines Ultraschallsystems gezielt gesetzt wird, um eine Fahrzeugecke des erfassten Fahrzeugs zu detektieren. Auf Basis des Schätzwertes wird die Ultraschallpulsfolge dahingehend optimiert, dass die Fahrzeugecke bestmöglich lokalisiert werden kann. Die Genauigkeit der Lage der Fahrzeugecke wird dadurch zwar nicht in jedem Fall erhöht, jedoch in den meisten Fällen.

Der Radbereich kann Insbesondere ein Rad des Fahrzeugs und einen Radkasten umfassen, wobei der Radkasten das Gehäuse ist, in dem sich das Rad des Fahrzeugs befindet. Eine erfindungsgemäße Erfassung des Radbereichs kann eine Bestimmung einer räumlichen Lage eines Radkasten umfassen und/oder einer räumlichen Lage eines Rads, insbesondere eines Mittelpunkt des Rads, welcher eine Lage der Vorderachse und/oder Hinterachse des Fahrzeuges definieren kann.

Ein erfindungsgemäßes Ultraschallsystem kann eine Gruppe von Ultraschallsensoren umfassen, welche gemeinsam eine Teilumgebung des Fahrzeuges erfassen, beispielsweise können die Ultraschallsensoren im Frontbereich zur Erfassung einer vorderseitigen Fahrzeugumgebung und/oder die Ultraschallsensoren im Seitenbereich zur Erfassung eines Seitenbereichs des Fahrzeugs und/oder die Ultraschallsensoren im Heckbereich zur Erfassung einer rückwärtigen Umgebung des Fahrzeugs einem Ultraschallsystem zugeordnet sein. Das Ultraschällsystem kann darüber hinaus auch eine der jeweiligen Gruppe zugeordnete Steuereinrichtung und eine Signalverarbeitungseinrichtung umfassen.

Aus dem geschätzten Abstand des Radbereichs zu der Fahrzeugecke wird ein Zeitpunkt berechnet, zu welchem der Impuls des Ultraschallsystems gezielt gesetzt wird, um die Fahrzeugecke des erfassten Fahrzeugs zu detektieren. Der Impuls kann einen Einzel- oder einen Doppelschuss eines oder mehrerer Ultraschallsensoren umfassen.

Bevorzugt werden Odometriedaten und/oder Daten aus einem präzisen GPS-System und/oder eine Kenntnis der aktuellen Fahrzeuggeschwindigkeit bei der Berechnung des Zeitpunktes verwendet, zu welchem der Impuls des Ultraschallsystems gezielt gesetzt wird, um die Fahrzeugecke des erfassen Fahrzeugs zu detektieren. Weiterhin ist eine sehr präzise Bestimmung des Abstands des Impulssensors zum Radbereich, insbesondere zum Radkasten oder zum Rad des detektierten Fahrzeugs erforderlich. Wenn das Fahrzeug mit konstanter Geschwindigkeit an einem geparkten Fahrzeug vorbeirollt, welches seinerseits steht, dann berechnet sich der Zeitraum bis zum gezielt gesetzten Impuls aus dem Quotient der Geschwindigkeit des Ego-Fahrzeugs und der geschätzten Wegstrecke des Impulssensorsbis zur Ecke, wobei ein Abstand eines der Ecke nächstgelegen Ultraschallsensors zu der Ecke ein Minimum eingenommen haben soll.

Nach einer Ausführungsform der Erfindung wird ein Zyklus des Ultraschallsystems zur vollständigen Umgebungserfassung für die gezielte Ansteuerung eines Ultraschallsensors (Einzelschuss) oder zweier Ultraschallsensoren (Doppelschuss) zum Zwecke der Eckenlokalisierung unterbrochen. Mit vollständiger Umgebungserfassung, d. h. mit einem Zyklus, ist gemeint, dass eine Gruppe von Ultraschallsensoren, welche eine Teilumgebung des Fahrzeugs erfassen, die ihr zugeordnete Teilumgebung vollständig erfassen. Dieser Vorgang kann auch als ein vollständiger Scan bezeichnet sein. Bei einer vollständigen Umgebungserfassung können die beteiligten Ultraschallsensoren beispielsweise seriell nacheinander durchgeschaltet werden. Erfindungsgemäß wird der Ultraschallimpuls möglichst nahe an der Fahrzeugecke abgesetzt. Dies kann bedeuten, dass ein Ultraschallzyklus zur vollständigen Umgebungserfassung hierdurch verkürzt wird.

Bevorzugt wird zumindest ein Ultraschallimpuls, welcher im normalen Zyklus des vollständigen Umgebungsscans dem gezielt abgesetzten vorausgehen würde, unterdrückt, damit Echosignale von vor dem gezielt abgesetzten Impuls abgesetzten Impulsen eine Detektion der Fahrzeugecke nicht stören.

Die Eckenlokalisierung kann über einen definierten Zeitraum erfolgen, beispielsweise über eine Dauer eines vollständigen Scans, beispielsweise zwischen 60 ms und 120 ms, um eine ausreichende Genauigkeit der Eckenlokalisierung zu erreichen. Dabei kann eine Updaterate des Ultraschallsystems höher als bei einem normalen Umgebungsscan sein, beispielsweise zweifach, dreifach, vierfach oder fünffach gegenüber einer normalen Updaterate des Ultraschallsystems erhöht sein. Dies ist besonders vorteilhaft, wenn die zu lokalisierende Ecke sich in einem definierten Abstand, beispielsweise in weniger als 3 m, insbesondere in weniger als 2 m oder in weniger als 1 m Entfernung von dem Fahrzeug befindet. Nach erfolgter Eckenlokalisierung kann der gewöhnliche Umgebungsscan wieder aufgenommen werden.

Nach einer bevorzugten Ausführungsform der Erfindung wird der Abstand des Radkastens zu der Fahrzeugecke auf Basis von Bilddaten eines optischen Sensorsystems geschätzt. Das optische Sensorsystem kann als Monokular- oder Stereovideokamerasystem ausgebildet sein. Bevorzugt umfasst das optische Sensorsystem eine zur Aufnahme von Parklücken geeignete Kamera, beispielsweise eine hinter der Windschutzscheibe angeordnete Multifunktionskamera und/oder eine Seitenkamera, besonders bevorzugt eine in einem Seitenspiegel des Fahrzeugs verbaute Surround-View-Kamera.

Nach einer bevorzugten Ausführungsform der Erfindung wird auf Basis der Daten des optischen Sensorsystems eine Fahrzeugklasse erkannt Fahrzeugen, welche derselben Fahrzeugklasse angehören, kann ein ausreichend einheitlicher Abstand des Radbereichs zu der Fahrzeugecke zugeordnet werden. Nach einer ersten Ausführungsform der Erfindung werden Fahrzeugklassen nach einer Klassifikation des deutschen Kraftfahrtbundesamts unterschieden. Fahrzeuge einer ersten Klasse können beispielsweise Kleinstwagen sein, Fahrzeuge einer zweiten Klasse Kleinwagen, Fahrzeuge einer dritten Klasse Kompaktklasse, Fahrzeuge einer vierten Klasse Mittelklasse, Fahrzeuge einer fünften Klasse Obere Mittelklasse, Fahrzeuge einer sechsten Klasse Oberklasse, Fahrzeuge einer siebten Klasse Sportwagen, Fahrzeuge einer achten Klasse Kleintransporter und Vans, Fahrzeuge einer neunten Klasse Geländewagen, Fahrzeuge einer zehnten Klasse Pickups und Fahrzeuge einer elften Klasse leichte Nutzfahrzeuge. Alternativ dazu kann auch eine Klassifikation der EU-Kommission verwendet werden, welche Kleinstwagen, Kleinwagen, Mittelklasse, Obere Mittelklasse, Oberklasse, Luxusklasse, Sportwagen, Mehrzweckfahrzeuge und Geländewagen unterscheidet. Alternativ dazu kann auch eine Klassifikation beispielsweise anhand der Euro NCAP 1997 - 2009 oder auch ein US-System verwendet werden.

Nach einer weiteren Ausführungsform der Erfindung wird auf Basis der Daten des optischen Sensorsystems ein Fahrzeugmodell erkannt und anhand des Fahrzeugmodells der Abstand zwischen dem Radbereich und der Fahrzeugecke bestimmt. Die Erfindung geht davon aus, dass Fahrzeugen desselben Fahrzeugmodells ein ausreichend einheitlicher Abstand des Radbereichs zu der Fahrzeugecke zugeordnet werden kann. Eine Liste derartiger Modelle kann beispielsweise umfassen: Microcar Virgo, Isetta, Aston Martin Cygnet, Citroën C1, Chevrolet Spark, Daewoo Matiz, Daihatsu Cuore, Fiat 500, Ford Ka, Hyundai i10, Kia Picanto, Mitsubishi i MiEV, Nissan Pixo, Peugeot 107, Renault Twingo, Seat Mii, Škoda Citigo, Smart Fortwo, Suzuki Alto, Tata Nano, Toyota Aygo, Toyota iQ, Volkswagen Fox, Volkswagen up!, Alfa Romeo MiTo, Audi A1, Chevrofet Aveo, Citroën C3, Citroën DS3, Dacia Sandero, Daihatsu Charade, Fiat Punto, Ford Fiesta, Honda Jazz/Honda Fit, Hyundai i20, Kia Rio, Lada Kalina, Lancia Ypsilon, Mazda2, Mini (BMW Group), Mitsubishi Colt, Nissan Micra, Opel Corsa, Peugeot 207, Renault Clio, Renault Symbol, Seat Ibiza, Škoda Fabia, Subaru Justy, Suzuki Swift, Tata Indica, Toyota Yaris, Volkswagen Polo, Alfa Romeo Giulietta, Audi A3, BMW 1er, Chevrolet Cruze, Citroen C4, Dacia Logan, Fiat Bravo, Ford Focus, Honda Civic, Hyundai i30, Kia cee'd, Lexus CT, Lancia Delta, Mazda3, Mercedes-Benz A-Klasse, Mitsubishi Lancer, Nissan Tiida, Opel Astra, Peugeot 308, Renault Mégane, Seat Leon, Škoda Octavia, Subaru Impreza, Suzuki SX4, Toyota Auris, Volkswagen Golf, Volvo C30, Chevrolet Malibu, Citroën C5, Ford Mondeo, Hyundai i40, Kia Magentis, Mazda6, Opel Insignia, Peugeot 508, Renault Laguna, Samand, Seat Exeo, Subaru Legacy, Toyota Avensis, Toyota Prius, Suzuki Kizashi, Volkswagen Passat, Alfa Romeo 159, Audi A4, Audi A5, BMW X1, BMW 3er, Cadillac CTS, Infiniti G V36/CV36, Lexus IS, Mercedes-Benz C-Klasse, Saab 9-3, Volvo S60, Audi A7, Buick Luceme, Chrysler 300, Dodge Charger (LX), Ford Taurus, Holden Caprice, Holden Commodore, Honda Accord (USA), Nissan Maxima, Toyota Avalon, Toyota Crown, Chevrolet Impala, Audi A6, BMW 5er, Cadillac CTS, Chrysler 300C, Jaguar XF, Lexus GS, Lincoln LS, Mercedes-Benz E-Klasse, Volvo S80, Audi A8, Bentley Continental Flying Spur, Bentley Mulsanne, Bentley Brooklands, BMW 7er, Cadillac DTS, Hyundai Equus, Jaguar X351, Lexus LS, Lincoln Town Car, Maserati Quattroporte, Maybach 57 und 62, Mercedes-Benz S-Klasse, Porsche Panamera, Rolls-Royce Ghost, Rolls-Royce Phantom, SsangYong Chairman, Toyota Century, Volkswagen Phaeton, Chevrolet Corvette, Ferrari 458 Italia, Lamborghini Gallardo, Nissan 370Z, Porsche 911, Porsche Boxster, Aston Martin Rapide, Bentley Continental GT, Bentley Azure, Ferrari 612 Scaglietti, Jaguar XK, Maserati GranTurismo, Mercedes-Benz CL-Klasse, Mercedes-Benz SL-Klasse, Bugatti Veyron, Ferrari Enzo, Pagani Zonda, Chevrolet Camaro, BMW 6er, Mercedes-Benz CLK-Klasse, Volvo C70, Volkswagen Eos, Audi TT, Honda S2000, Lotus Elise, Mazda MX-5, Porsche Boxster, Citroën Berlingo, Fiat Ducato, Ford Tourneo Connect, Mercedes-Benz Sprinter, Opel Movano, Opel Combo, Peugeot Partner, Renault Kangoo, Škoda Roomster, Volkswagen Caddy, Volkswagen Crafter, Opel Meriva, Fiat Idea, Citroen C3 Picasso, Mazda5, Ford C-Max, Kia Carens, Opel Zafira, Peugeot 5008, Toyota Verso, Volkswagen Touran, Chrysler Town and Country, Ford Galaxy, Honda Odyssey, Hyundai Trajet, Kia Carnival, Mitsubishi Grandis, Peugeot 807, Daihatsu Terios, Fiat Sedici, Ford EcoSport, Honda HR-V, Jeep Wrangler, Lada Niva, Mini Countryman, Mitsubishi Pajero iO, Nissan Juke, Škoda Yeti, Suzuki Jimny, Audi Q5, Chevrolet Equinox, BMW X3, Dacia Duster, Ford Kuga, Honda CR-V, Hyundai ix35, Jeep Liberty, Mercedes-Benz GLK-Klasse, Mitsubishi ASX, Toyota RAV4, Opel Antara, Isuzu VehiCROSS, SsangYong Actyon, BMW X6, Chevrolet Tahoe, Ford Explorer, Jeep Grand Cherokee, Land Rover Discovery, Volkswagen Touareg, Cadillac Escalade EXT, Chevrolet Suburban, Jeep Commander, Range Rover, Toyota Land Cruiser, Chevrolet Montana, Fiat Strada, Mitsubishi Triton, Volkswagen Saveiro Mid-size pickup truck Chevrolet Colorado, Ford Ranger, Mitsubishi Triton/L200, Nissan Navara, Dodge Ram, Ford F-150, GMC Sierra, Nissan Titan, Toyota Tundra, Chevrolet Silverado, Ford Super Duty, Citroen Berlingo, Škoda Praktik, Volkswagen Caddy.

Der Abstand des Radbereichs zu der Fahrzeugecke für eine Vielzahl von Fahrzeugklassen und/oder für eine Vielzahl von Fahrzeugmodellen kann als ein Eintrag in einer Datenbank abgelegt sein. Insbesondere können in einer Datenbank der Abstand zwischen Merkmalen eines Radkastens und einem Fahrzeugheck und/oder einer Fahrzeugfront und/oder der Abstand zwischen einem Rad und einem Fahrzeugheck und/oder einer Fahrzeugfront und/oder der Abstand zwischen einer Vorderachse und/oder einer Hinterachse des Fahrzeugs und einem Fahrzeugheck und/oder einer Fahrzeugfront für eine Vielzahl von Fahrzeugklassen und/oder für eine Vielzahl von Fahrzeugmodellen abgelegt sein.

Für den Fall, dass sich die Fahrzeugklasse undloder das Fahrzeugmodell nicht bestimmen lässt, kann auch anhand eines *Best Match*-Prozesses eine Klasse und/oder ein Modell bestimmt werden, welches dem Fahrzeug auf den Kamerabild am nächsten kommt.

Die angegebenen Verfahren werden bevorzugt im Rahmen einer Fahrerassistenz zur Vermessung von Parklücken angewendet und sind von einem Insassen aktivierbar, insbesondere von dem Fahrer selbst. Die Parklückenerkennung auf Basis eines der vorher beschriebenen Verfahren kann auch standardmäßig bei Aktivierung eines Einparkassistenten durch einen Insassen, etwa den Fahrer, mitgestartet werden.

Die angegebenen Verfahren können aber auch beim Manövrieren des Fahrzeugs bei niedrigen Geschwindigkeiten angewendet werden, beispielsweise aus einer Parklücke heraus, in eine Parklücke hinein oder auf einem Supermarktparkplatz oder auf einem Gelände, in welchem eine präzise Navigation um geparkte Fahrzeuge herum notwendig sein kann.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrerassistenzsystems oder eines Subsystems hiervon in einem Fahrzeug handeln oder um eine Applikation für Fahrerassistenzfunktionen, welche auf einem Smartphone ausführbar ist Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa einem Server zum Herunterladen bereitgestellt werden, z. B. über ein Datennetzwerk wie etwa das Internet oder eine Kommunikationsverbindung wie etwa eine Telefonleitung oder eine drahtlose Verbindung.

Erfindungsgemäß ist außerdem ein Fahrerassistenzsystem zur Ausführung eines der beschriebenen Verfahren vorgesehen, aufweisend
- ein Sensorsystem, insbesondere ein optisches Sensorsystem oder ein Ultraschallsensorsystem zur Erfassung einer Fahrzeugumgebung,
- eine Komponente zur Erkennung eines Radbereichs auf Daten des Sensorsystems,
- eine Komponente zur Schätzung eines Abstands zwischen einem Radbereich und einer Fahrzeugecke und
- eine Komponente zur Ansteuerung eines oder mehrerer Ultraschallsensoren.

Die Komponente zur Erkennung des Radbereichs von Fahrzeugen kann beispielsweise auf Bildern eines optischen Sensors Bildinformationen wie optische Kontraste oder aus Bildfolgen oder von stereoskopischen Kameras gewonnene 3D-Information verwenden.

Das Fahrerassistenzsystem umfasst weiterhin bevorzugt eine Steuervorrichtung für das Ultraschallsystem, welches geeignet ist, einen oder mehrere Ultraschallimpulse aus einem Zyklus zur Umgebungserfassung auszusetzen, so dass ein oder mehrere Ultraschallsensoren zu einem definierten Zeitpunkt gezielt angesteuert werden können, so dass dieser bzw. diese senden, um aus dem Echo eine Fahrzeugecke präzise zu lokalisieren, ohne dass Echosignale voriger Schüsse die Eckenlokalisierung erschweren.

Weitere Ausführungsbeispiele und Vorteile der Erfindung werden nachfolgend mit Bezug auf die Zeichnungen beschrieben.

### Kurze Beschreibung der Zeichnungen

Es zeigen
- Fig. 1: eine schematische Darstellung funktionaler Komponenten einer Datenverarbeitungsanlage in einem Fahrzeug und
- Fig. 2: eine Seitenansicht eines zu erfassenden Fahrzeugs.

### Ausführungsformen der Erfindung

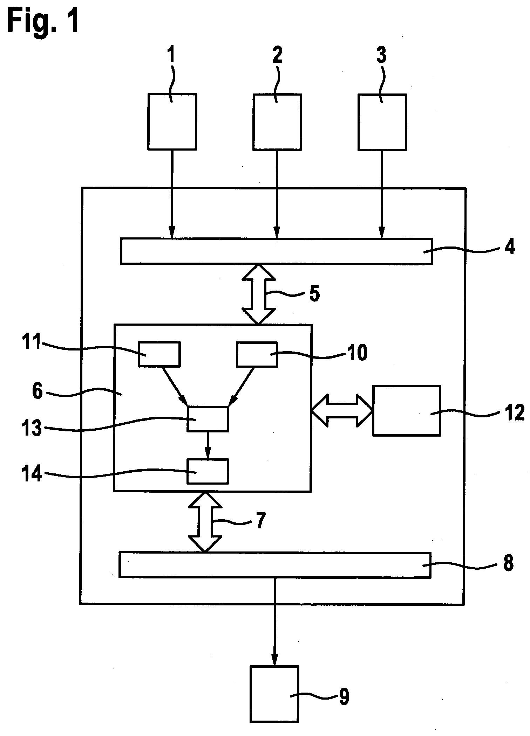

Fig. 1 zeigt eine schematische Darstellung funktionaler Komponenten eines Fahrerassistenzsystems gemäß der vorliegenden Erfindung. Das Fahrerassistenzsystem ist dazu ausgebildet, aus Daten eines Sensorsystems einen Radbereich eines Fahrzeugs zu erkennen, einen Abstand des Radbereichs zu einer Fahrzeugecke des erkannten Fahrzeugs zu schätzen und zumindest einen Ultraschallimpuls zu einem definierten Zeitpunkt abzusetzen, um eine Fahrzeugecke des erkannten Fahrzeugs gezielt zu detektierten.

Das Fahrerassistenzsystem umfasst hierzu zumindest einen Bildsensor eines optischen Sensorsystems 1, welcher als eine Monokular- oder Stereovideokamera ausgebildet sein kann. Das Fahrerassistenzsystem umfasst außerdem ein Ultraschallsensorsystem 2, sowie gegebenenfalls weitere Sensoren, beispielsweise eine Fahrzeugdatensensorik 3. Die Signale des optischen Sensorsystems 1, des Ultraschallsensorsystems 2 und der Fahrzeugdatensensorik 3 werden in einer Eingangsschaltung 4 empfangen. Die Eingangsschaltung 4 ist mit einem Bussystem 5 zum Datenaustausch mit einer Datenverarbeitungseinrichtung 6 verbunden. Die Datenverarbeitungseinrichtung 6 ist mit einem weiteren 7 oder demselben 5 Bussystem mit einer Ausgangsschaltung 8 verbunden, die eingerichtet ist, ein Ultraschallsystem 9 zu steuern.

Die Datenverarbeitungseinrichtung 6 ist an einen Datenspeicher 12 angeschlossen, in welchem Angaben zu Abständen von Radumgebungen zu Fahrzeugecken, beispielsweise Abstände zwischen einer Vorderachse eines Fahrzeugs zu einer vorderseitigen Ecke und/oder Abstände einer Hinterachse eines Fahrzeugs zu einer Ecke des Fahrzeughecks oder auch Abstände von Karosseriemerkmalen wie Radkästen zu einer vorderseitigen Ecke des Fahrzeugs und/oder einer Ecke des Fahrzeughecks beispielsweise in einer Datenbank gespeichert sind. Die Abstände oder, falls die Abstände innerhalb einer Fahrzeugklasse oder eines Fahrzeugtyps nicht einheitlich groß sind, geeignete Mittelwerte dieser Abstände sind für jede Fahrzeugklasse und für jeden Fahrzeugtyp in der Datenbank hinterlegt.

Die Datenverarbeitungseinrichtung 6 umfasst erfindungsgemäß eine Komponente 10 zur Erkennung einer Radumgebung eines Fahrzeugs, in welcher insbesondere die Daten des optischen Sensorsystems 1 und/oder des Ultraschallsensorsystems 2 verarbeitet werden. Aus Daten des optischen Sensorsystems 1 und/oder des Ultraschallsensorsystems 2 ermittelt die Komponente 10 Merkmale einer Radumgebung, beispielsweise die Lage eines Rads und/oder eines Radkastens und/oder einer Fahrzeugachse und insbesondere Abstände dieser Merkmale zu einzelnen Sensoren des Ultraschallsensorsystems 2.

Die Datenverarbeitungseinrichtung 6 umfasst weiterhin eine Komponente 11 zur Erkennung von Fahrzeugmodellen und/oder Fahrzeugklassen, in welcher insbesondere die Daten des optischen Sensorsystems 1 verarbeitet werden. Aus den Daten des optischen Sensorsystems 1 ermittelt die Komponente 11 die Fahrzeugklasse und/oder das Fahrzeugmodell. Aus der Datenbank 12 werden für die ermittelte Fahrzeugklasse und/oder das ermittelte Fahrzeugmodell die Abstände von der Radumgebung bis zur Fahrzeugecke entnommen.

Ein Abstandsschätzmodul 13 schätzt aus den von der Komponente 10 zur Erkennung einer Radumgebung eines Fahrzeugs und von der Komponente 11 zur Erkennung von Fahrzeugmodellen und/oder Fahrzeugklassen ermittelten Daten einen Abstand zwischen der erkannten Radumgebung und einer Fahrzeugecke. Hieraus ermittelt ein Schussberechnungsmodul 14 eine Zeit, zu welcher ein Ultraschallsensor angesteuert werden muss, so dass dieser beim Feuern möglichst nahe an der zu detektierenden Fahrzeugecke liegt. Das Schussberechnungsmodul 14 berechnet außerdem, welcher oder welche Ultraschallsensoren feuern müssen, da sie der Fahrzeugecke am nächsten gelegen sein werden.

Zu einem geeigneten Zeitpunkt, d. h. etwa 50 ms bis 200 ms oder etwa 50 ms bis 100 ms vor dem berechneten Schusszeitpunkt, steuert das Schussberechnungsmodul 14 die Ausgangsschaltung 8 an, so dass ein oder mehrere direkt vorher abzugebende Schüsse aus dem normalen Zyklus des Umgebungsscans aus dem Ultraschallsystem 2 unterdrückt werden und stattdessen zum berechneten Zeitpunkt ein berechneter Ultraschallsensor oder mehrere berechnete Ultraschallsensoren des Ultraschallsystems 9 feuern.

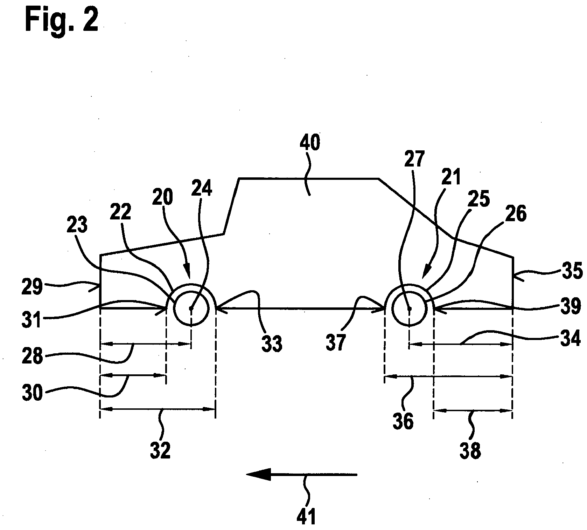

Fig. 2 zeigt eine Seitenansicht eines zu detektierenden Fahrzeugs 40. Das dargestellte Fahrzeug 40 umfasst eine Vorderradumgebung 20 und eine Hinterradumgebung 21. Die Vorderradumgebung 20 umfasst einen vorderen Radkasten 22 und ein Vorderrad 23 mit einem Mittelpunkt 24 des Vorderrads 23. Die Hinterradumgebung 21 umfasst einen hinteren Radkasten 25, ein Hinterrad 26 und einen Mittelpunkt 27 des Hinterrads 26. Ein erster Abstand 28 wird durch die Lage des Vorderradmittelpunktes 24 zu einer vorderen Fahrzeugecke 29 definiert. Ein zweiter Abstand 30 wird durch die Lage einer vorderen Ecke 31 des vorderen Radkastens 22 zur vorderen Fahrzeugecke 29 definiert. Ein dritter Abstand 32 wird durch die Lage einer hinteren Ecke 33 des vorderen Radkastens 22 zur vorderen Fahrzeugecke 29 definiert. Entsprechend wird ein vierter Abstand 34 durch die Lage der Hinterachse zu einer hinteren Fahrzeugecke 35 definiert, nämlich durch die Lage des Mittelpunkts 27 des Hinterrads 26 zu der hinteren Fahrzeugecke 35. Ein fünfter Abstand 36 wird durch die Lage einer vorderen Ecke 37 des hinteren Radkastens 25 zu der hinteren Fahrzeugecke 35 definiert. Ein sechster Abstand 38 wird durch die Lage einer hinteren Ecke 39 des hinteren Radkastens 25 zu der hinteren Fahrzeugecke 35 definiert. Analog werden drei Abstände der Vorderradumgebung 20 zu der hinteren Fahrzeugecke 35 definiert sowie drei Abstände der Hinterradumgebung 21 zu der vorderen Fahrzeugecke 29.

Bei einer Vorbeifahrt des Egofahrzeugs an dem dargestellten, parkenden Fahrzeug 40 werden die vorderen und hinteren Radbereiche 20, 21 durch die Ultraschallsensoren, beispielsweise durch die Frontsensoren, und durch die optischen Bildsensoren möglichst genau erfasst. Aus den Daten der optischen Sensoren können, wie in Bezug auf Fig. 1 beschrieben, das Fahrzeugmodell oder die Fahrzeugklasse des Fahrzeugs 40 so bestimmt werden, dass zumindest einer der beschriebenen Abstände geschätzt werden kann. Hiervon ausgehend wird gezielt ein Ultraschallsensor zum Feuern angesteuert, bei einer Vorwärtsvorbeifahrt in einer durch den Pfeil 41 dargestellten Richtung beispielsweise ein Ultraschallsensor links außen eines Frontultraschallsystems. Die Ansteuerung erfolgt zu einem berechneten Zeitpunkt, d. h. wenn der entsprechende Ultraschallsensor an der vorderen Fahrzeugecke 29 des Fahrzeugs 40 angelangt ist. Hierdurch ist eine sehr präzise Lokalisierung der vorderen Fahrzeugecke 29 möglich.

## Patentansprüche

1. Verfahren zur Lokalisierung einer Fahrzeugecke (29, 35), wobei ein Sensorsystem (1, 2), insbesondere ein Ultraschallsensorsystem (2) oder ein optisches Sensorsystem (1), einen Radbereich (20, 21) eines Fahrzeugs (40) erfasst **dadurch gekennzeichnet, dass** ein Abstand des Radbereichs (20, 21) zu einer Fahrzeugecke (29, 35) des erfassten Fahrzeugs (40) geschätzt wird, woraufhin zumindest ein Impuls eines Ultraschallsystems (9) gezielt gesetzt wird, um die Fahrzeugecke (29, 35) des erfassten Fahrzeugs (40) zu detektieren.

2. Verfahren nach Anspruch 1, **dadurch gekennzeichnet, dass** ein Zyklus eines Ultraschallsystems (2) unterbrochen wird, um den Impuls des Ultraschallsystems (9) gezielt zu setzen.

3. Verfahren nach einem der vorhergehenden Ansprüche, **dadurch gekennzeichnet, dass** zumindest ein Ultraschallimpuls eines Ultraschallsystems (2), welcher im normalen Zyklus des vollständigen Umgebungsscans dem gezielt abgesetzten vorausgehen würde, unterdrückt wird.

4. Verfahren nach einem der vorhergehenden Ansprüche, **dadurch gekennzeichnet, dass** eine Detektion der Fahrzeugecke (29, 35) über einen definierten Zeitraum erfolgt, insbesondere über eine Dauer eines vollständigen Scans des Ultraschallsystems (9).

5. Verfahren nach einem der vorhergehenden Ansprüche, **dadurch gekennzeichnet, dass** auf Basis von Daten eines optischen Sensorsystems (1) eine Fahrzeugklasse des Fahrzeugs (40) erkannt wird, dessen Radbereich (20, 21) erfasst wurde.

6. Verfahren nach einem der vorhergehenden Ansprüche, **dadurch gekennzeichnet, dass** auf Basis von Daten eines optischen Sensorsystems (1) ein Fahrzeugmodell des Fahrzeugs (40) erkannt wird, dessen Radbereich (20, 21) erfasst wurde.

7. Verfahren zur Vermessung von Parklücken, wobei ein Verfahren zur Lokalisierung von Fahrzeugecken (29, 35) nach einem der Ansprüche 1 bis 6 verwendet wird.

8. Verfahren zum Manövrieren eines Fahrzeugs, wobei ein Verfahren zur Lokalisierung einer Fahrzeugecke (29, 35) nach einem der Ansprüche 1 bis 6 verwendet wird.

9. Computerprogramm zur Durchführung eines der Verfahren nach einem der Ansprüche 1 bis 8, wobei das Computerprogramm auf einer programmierbaren Computereinrichtung ausgeführt wird.

10. Fahrerassistenzsystem, zur Ausführung eines der Verfahren nach einem der Ansprüche 1 bis 8, aufweisend
- ein Sensorsystem, insbesondere ein optisches Sensorsystem (1) und/oder ein Ultraschallsensorsystem (2) zur Erfassung einer Fahrzeugumgebung,
- eine Komponente (11) zur Erkennung eines Radbereichs (20, 21) aus den Daten des Sensorsystems (1, 2),
**gekennzeichnet durch**
- eine Komponente (13) zur Schätzung eines Abstands zwischen einem Radbereich (20, 21) und einer Fahrzeugecke (29, 35) und
- eine Komponente (14) zur gezielten Ansteuerung eines oder mehrerer Ultraschallsensoren eines Ultraschallsystems (9), um die Fahrzeugecke (29, 35) der erfasster Fahrzeugs (40) zu detektieren.

## Claims

1. Method for determining the location of a vehicle corner (29, 35), wherein a sensor system (1, 2), in particular an ultrasonic sensor system (2) or an optical sensor system (1), detects a wheel region (20, 21) of a vehicle (40), **characterized in that** a distance of the wheel region (20, 21) from a vehicle corner (29, 35) of the detected vehicle (40) is estimated, after which at least one pulse of an ultrasonic system (9) is selectively set in order to detect the vehicle corner (29, 35) of the detected vehicle (40).

2. Method according to Claim 1, **characterized in that** a cycle of an ultrasonic system (2) is interrupted in order to set the pulse of the ultrasonic system (9) selectively.

3. Method according to one of the preceding claims, **characterized in that** at least one ultrasonic pulse of an ultrasonic system (2) which would precede the selectively output pulse in the normal cycle of the complete scan of the surroundings is suppressed.

4. Method according to one of the preceding claims, **characterized in that** detection of the vehicle corner (29, 35) takes place over a defined time period, in particular over a duration of a complete scan of the ultrasonic system (9).

5. Method according to one of the preceding claims, **characterized in that** a vehicle class of the vehicle (40) whose wheel region (20, 21) has been detected is determined on the basis of data of an optical sensor system (1).

6. Method according to one of the preceding claims, **characterized in that** a vehicle model of the vehicle (40) whose wheel region (20, 21) has been detected is determined on the basis of data of an optical sensor system (1).

7. Method for measuring parking spaces, wherein a method for determining the location of vehicle corners (29, 35) according to one of Claims 1 to 6 is used.

8. Method for manoeuvring a vehicle, wherein a method for determining the location of a vehicle corner (29, 35) according to one of Claims 1 to 6 is used.

9. Computer program for carrying out one of the methods according to one of Claims 1 to 8, wherein the computer program is executed on a programmable computer device.

10. Driver assistance system for carrying out one of the methods according to one of Claims 1 to 8, have
- a sensor system, in particular an optical sensor system (1) and/or an ultrasonic sensor system (2) for detecting the surroundings of a vehicle,
- a component (11) for detecting a wheel region (20, 21) on the basis of the data of the sensor system (1, 2),
**characterized by**
- a component (13) for estimating a distance between a wheel region (20, 21) and a vehicle corner (29, 35), and
- a component (14) for selectively actuating one or more ultrasonic sensors of an ultrasonic system (9) in order to detect the vehicle corner (29, 35) of the detected vehicle (40).

## Revendications

1. Procédé de localisation d'un coin de véhicule (29, 35), un système de détection (1, 2), notamment un système de détection à ultrasons (2) ou un système de détection optique (1) détectant une zone de roue (20, 21) d'un véhicule (40), **caractérisé en ce qu'**un écart entre la zone de roue (20, 21) et un coin de véhicule (29, 35) du véhicule (40) détecté est estimé, après quoi au moins une impulsion d'un système à ultrasons (9) est produite de manière ciblée pour détecter le coin de véhicule (29, 35) du véhicule (40) détecté.

2. Procédé selon la revendication 1, **caractérisé en ce qu'**un cycle d'un système à ultrasons (2) est interrompu afin de produire l'impulsion du système à ultrasons (9) de manière ciblée.

3. Procédé selon l'une des revendications précédentes, **caractérisé en ce qu'**au moins une impulsion d'ultrasons d'un système à ultrasons (2) qui, dans le cycle normal du balayage complet de l'environnement, précéderait celle qui est produite de manière ciblée, est inhibée.

4. Procédé selon l'une des revendications précédentes, **caractérisé en ce qu'**une détection du coin de véhicule (29, 35) s'effectue sur une période définie, notamment sur une durée d'un balayage complet par le système à ultrasons (9).

5. Procédé selon l'une des revendications précédentes, **caractérisé en ce qu'**une catégorie du véhicule (40) dont la zone de roue (20, 21) a été détectée est reconnue en se basant sur les données d'un système de détection optique (1).

6. Procédé selon l'une des revendications précédentes, **caractérisé en ce qu'**un modèle du véhicule (40) dont la zone de roue (20, 21) a été détectée est reconnu en se basant sur les données d'un système de détection optique (1).

7. Procédé de mesure de créneaux de stationnement, selon lequel un procédé de localisation de coins de véhicule (29, 35) selon l'une des revendications 1 à 6 est utilisé.

8. Procédé de manoeuvre d'un véhicule, selon lequel un procédé de localisation d'un coin de véhicule (29, 35) selon l'une des revendications 1 à 6 est utilisé.

9. Programme informatique destiné à mettre en oeuvre l'un des procédés selon l'une des revendications 1 à 8, avec lequel le programme informatique est exécuté sur un dispositif informatique programmable.

10. Système d'assistance au conducteur destiné à mettre en oeuvre l'un des procédés selon l'une des revendications 1 à 8, comprenant
- un système de détection, notamment un système de détection optique (1) et/ou un système de détection à ultrasons (2) destiné à détecter l'environnement d'un véhicule,
- un composant (11) destiné à reconnaître une zone de roue (20, 21) à partir des données du système de détection (1, 2),
**caractérisé par**
- un composant (13) destiné à estimer un écart entre une zone de roue (20, 21) et un coin de véhicule (29, 35) et
- un composant (14) destiné à commander de manière ciblée un ou plusieurs détecteurs à ultrasons d'un système à ultrasons (9) afin de détecter le coin de véhicule (29, 35) du véhicule (40) détecté.
